# EUROPEAN PATENT SPECIFICATION

(11) **EP 0 563 968 B1**
(45) Date of publication and mention of the grant of the patent: **05.03.1997**
(21) Application number: 93105443.1
(22) Date of filing: 01.04.1993
(51) Int. Cl.: F16F 7/06, B60N 3/08, B60R 7/04

(54) **Friction damper**
Reibungsdämpfer
Amortisseur à friction

(30) Priority: 03.04.1992 JP 28182/92 U; 03.04.1992 JP 28183/92 U
(43) Date of publication of application: 06.10.1993
(60) Divisional application: 95111810.8
(73) Proprietor: Kato Hatsujo Kaisha Ltd., Yokohama-shi Kanagawa-ken (JP)
(72) Inventor: Umemura, Haruyuki, Chigasaki-shi, Kanagawa-ken (JP); Ogawa, Yasuyuki, Yokosuka-shi, Kanagawa-ken (JP); Miyoshi, Masakazu, Yokohama-shi, Kanagawa-ken (JP)
(74) Representative: Lewald, Dietrich, Dipl.-Ing.

(56) References cited:
- FR-A- 1 328 493
- US-A- 1 445 830
- US-A- 1 717 112
- US-A- 4 494 806
- US-A- 4 660 881

## Description

### BACKGROUND OF THE INVENTION

### Field of the Invention:

This invention relates to a friction damper used for a push-open type member, such as an ashtray in an automobile or a switching lid in a household electrical appliance, for example, which is kept biased constantly by a spring pressure in the opening direction, for the purpose of exerting a braking force on the member during the opening motion thereof.

### Description of the Prior Art:

As one example of the conventional friction damper of this class, the invention which is disclosed in Japanese Utility Model Publication No. 57-49216 may be cited.

This conventional friction damper, though not specifically illustrated diagrammatically herein, is provided with a housing having a storing chamber, a rotor rotatably disposed in the storing chamber of the housing, a toothed wheel interlocked with the leading terminal part of the rotor, and a plurality of metallic leaf spring members, the basal parts of which assume the shape of the letter J suitable for fast attachment to the rotor, and is constructed so as to exert a braking force upon such a push-open type member as mentioned above by virtue of the friction resistance which is produced between the curved leading terminal faces of the leaf spring members and the inner wall surface of the storing chamber of the housing when the curved leading terminal faces of the leaf spring members are slid along the inner wall surface of the storing chamber.

The use of the conventional friction damper for controlling the push-open type ashtray in an automobile, therefore, is attained by fixing the housing of the damper to one of the ashtray case and the frame for concealably retaining the ashtray case, providing a rack for the other of the two parts, and causing the rack to be interlocked with the toothed wheel of the damper. Consequently, when the ashtray case in the shut position is relieved of the locked state and allowed to start moving in the opening direction by dint of the spring pressure, the toothed wheel is rotated in response to the motion of the ashtray case, the rotor is induced to turn in tandem with the J-shaped leaf spring members in the same direction, and the curved leading terminal faces of the leaf spring members, and the inner wall surface of the housing jointly produce friction resistance. As a result, a braking force is exerted on the ashtray case so that the ashtray case is infallibly enabled to move slowly in the opening direction.

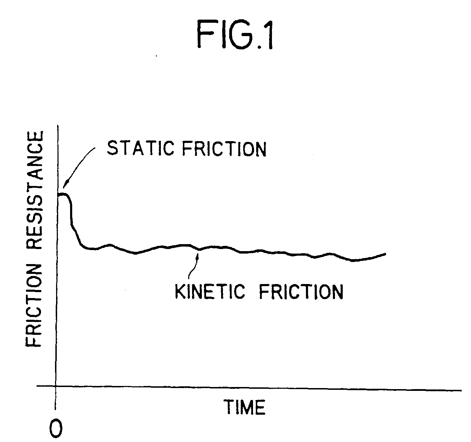

Indeed, the conventional friction damper has the advantage that it is only meagerly susceptible to the influence of change in temperature as compared with the oil damper and has absolutely no possibility of oil leakage. It nevertheless entails the disadvantage that the braking resistance inevitably differs when the damper starts its operation and when it is normally operating because the static friction is greater than the kinetic friction of the leaf spring members as illustrated in Figure 1.

When the breaking force to be exerted on the push-open type member is set in conformity with the kinetic friction, therefore, the large starting torque due to the static friction has an adverse effect of obstructing the push-open type member such as the ashtray case from moving in the opening direction. When the braking force is conversely set in conformity with the static friction, there is a very fair possibility that the magnitude of the kinetic friction will be too small to exert an ample braking force on the push-open type member.

Such a friction damper also has become known from FR-A-1 328 493 disclosing a housing having a storing chamber, a rotor rotatably disposed in the housing and a leaf spring attached to the rotor and being slidable on the inner surface of the housing, thus describing the preamble of claim 1.

The main object of this invention is to provide a friction damper device which gives an effective solution to the problem of the prior art damper.

### SUMMARY OF THE INVENTION

To accomplish the object described above, according to the present invention there is provided a friction damper for a push-open type member defined by the features of claim 1.

The above and other objects, features and advantages of this invention will be described in detail below with reference to the accompanying drawings.

### BRIEF DESCRIPTION OF THE DRAWINGS

Figure 1 is a diagram showing the magnitudes of static friction and kinetic friction produced in a leaf spring member.

Figure 2 is a perspective view illustrating in an exploded state a friction damper as the first embodiment of the present invention.

Figure 3 is an explanatory diagram illustrating an idle empty area formed between a toothed wheel and a rotor of the damper.

Figure 4 is a longitudinal cross section illustrating the damper in an assembled state.

Figure 5 is an explanatory diagram illustrating the state which is assumed by the toothed wheel after it has been idly rotated over the range of the idle empty area in the X direction.

Figure 6 is an explanatory diagram illustrating the state which is assumed by the toothed wheel after it has been idly rotated over the range of the idle empty area in the Y direction.

Figure 7 is an explanatory diagram illustrating a modification of the first embodiment.

### DETAILED DESCRIPTION OF THE PREFERRED EMBODIMENTS

Now, this invention will be described more specifically below with reference to the illustrated embodiments.

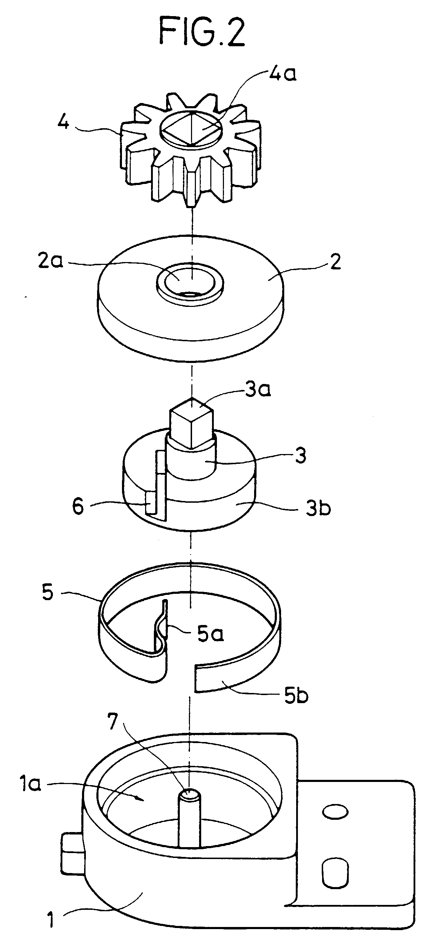

The friction damper according to the first embodiment is shown in Figure 2 through Figure 6 and provided with a housing 1 having a storing chamber la opening on one surface side, a cap 2 for shutting the opening of the storing chamber 1a of the housing 1, a rotor 3 disposed rotatably inside the storing chamber la of the housing 1, a toothed wheel 4 interlocked with a leading terminal part 3a of the rotor 3 protruding outwardly through a cap hole 2a, and an annular metallic leaf spring member 5 attached fast at one terminal part 5a thereof to an attaching groove 6 formed in a disklike basal part 3b of the rotor 3, and is constructed so as to exert a braking force on a given push-open type member by virtue of the friction resistance to be produced between the outer peripheral surface of the leaf spring member 5 and the inner wall surface of the storing chamber 1a by causing the outer peripheral surface of the leaf spring member 5 inclusive of the other terminal part 5b thereof to slide on the inner wall surface of the storing chamber 1a of the housing 1.

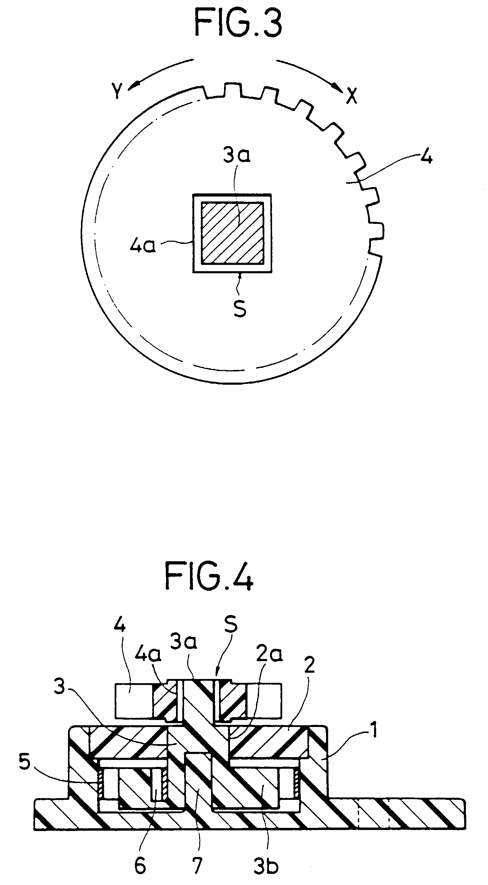

The first embodiment, in addition to the construction described above, contemplates forming the leading terminal part 3a of the rotor 3 in an angular shape, forming an interlocking hole 4a of the toothed wheel 4 also in a similarly angular shape, and setting the angular interlocking hole 4a larger than the angular leading terminal part 3a, thereby interposing a rectangular idle empty area S uniformly between the inner boundary of the angular interlocking hole 4a and the outer boundary of the angular leading part 3a as illustrated in Figure 3 and consequently enabling the toothed wheel 4 to rotate idly over the range of the empty area S independently of the rotor 3.

In the friction damper of the first embodiment, therefore, the rotor 3 is enabled to be rotatably supported on a support part 7 projecting from the bottom surface of the storing chamber 1a and the annular leaf spring member 5 having the outer peripheral surface thereof pressed against the inner wall surface of the storing chamber 1a to be slidably disposed inside the storing chamber 1a by inserting the one terminal part 5a of the annular leaf spring member 5 into the attaching groove 6 formed in the disklike basal part 3b and, after the one terminal part 5a of the leaf spring member 5 has been attached fast to the rotor 3, accommodating the rotor 3 in the storing chamber 1a of the housing 1 as illustrated in Figure 4.

Then the damper can be readily set in place, therefore, by shutting the opening of the storing chamber 1a with the cap 2 and connecting the toothed wheel 4 through its angular interlocking hole 4a to the angular leading terminal part 3a of the rotor 3 protruding outwardly through the hole 2a of the cap 2. Needless to say in this case, the presence of the idle empty area S necessitates provision of means which, though omitted from specific illustration herein, prevents the toothed wheel 4 from slipping out through the angular leading terminal part 3a of the rotor 3.

The application of the friction damper to a push-open type ashtray in an automobile is accomplished, as in the case of the conventional friction damper, by fixing the housing 1 of the damper through a flange part thereof to one of the ashtray case and the frame concealably retaining the ashtray case, providing a rack for the other of the two component parts, and allowing the rack to be meshed with the toothed wheel 4. In this case, the relevant component parts are so assembled that the rotor 3 rotates in the X direction (in which the leaf spring member 5 as a whole is radially expanded) when the ashtray case is opened and that the rotor 3 rotates in the Y direction (in which the leaf spring member 5 as a whole is radially contracted) in Figure 3.

When the ashtray case in the shut position is relieved of the locked state and set on the verge of moving in the opening direction by virtue of the spring pressure, in the absence of the idle empty area S the rotor 3 introduces the moving force as an input through the toothed wheel 4 and immediately rotates in the X direction while accompanying the annular leaf spring member 5.

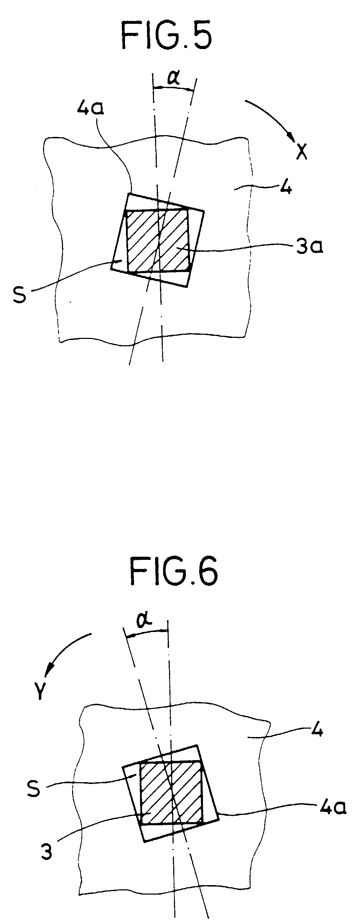

In the first embodiment, however, since the idle empty area S is interposed between the angular interlocking hole 4a of the toothed wheel 4 and the angular leading terminal part 3a of the rotor 3 as described above, the toothed wheel 4 alone is idly rotated by an angle α proportionate to the idle empty area S and the ashtray case is consequently allowed to produce a free initial motion in the opening direction of its own as illustrated in Figure 5 in advance of the rotation of the rotor 3 synchronized with the ashtray case.

As a result, the edge of the angular interlocking hole 4a of the toothed wheel 4 collides against the angular leading terminal part 3a of the rotor 3 and the rotor 3 is caused by the input from the toothed wheel 4 to rotate in the X direction while being accompanied by the annular leaf spring member 5 only after the toothed wheel 4 has idly rotated in the presence of the idle empty area S. Even when the static friction gives birth to a large actuating torque, the inertial force of the ashtray case which has already started motion overcomes this large actuating torque and allows smooth rotation of the rotor 3.

As a result, in the first embodiment, the steady rotational torque arising from the kinetic friction is effectively utilized to exert a stable braking force infallibly on the ashtray case.

When the ashtray case in the opened position is to be pushed into the frame, the rotor 3 accompanied by the annular leaf spring member 5 is rotated in the Y direction this time. Again in this case, the rotor 3 accompanied by the annular leaf spring member 5 is allowed to rotate in the Y direction only after the toothed wheel 4 has idly rotated by an angle α proportionate to the idle empty area S and the edge of the angular interlocking hole 4a of the toothed wheel 4 has subsequently collided against the angular leading terminal part 3a of the rotor 3 as illustrated in Figure 6.

In this case, the annular leaf spring member 5 produces a sliding motion while keeping its one terminal part 5a closely approximated to its other terminal part 5b as though causing the entirety thereof to contract radially. Thus, the friction resistance generated between the outer peripheral surface of the leaf spring member 5 and the inner wall surface of the storing chamber 1a is decreased to the extent of enabling the ashtray case to be smoothly pushed with feeble force into the frame.

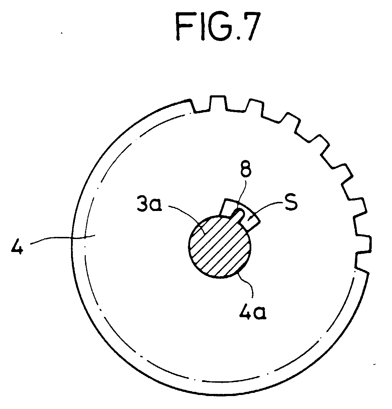

The first embodiment described above represents a case of enabling the idle empty area S for allowing idle rotation of the toothed wheel 4 in a fixed range to be formed in a rectangular shape between the angular interlocking hole 4a and the angular leading terminal part 3a. Optionally, the same operation and effect of he idle empty area S as described above may be obtained under the same principle according to a second embodiment by forming the leading terminal part 3a of the rotor 3 and the interlocking hole 4a of the toothed wheel 4 both in a circular shape, forming a protrusion 8 on one of the circular leading terminal part 3a and the circular interlocking hole 4a, inserting a notched idle empty area S in the other of the two component parts, and allowing the protrusion 8 to confront the interior of the notched idle empty area S thereby enabling the toothed wheel 4 to rotate idly within the expanse of the notched idle empty area S as illustrated in Figure 7.

Owing to the adoption of the construction described above, this invention allows effective utilization of the steady rotational torque arising from the kinetic friction as the braking force without being affected by the influence of the large actuating torque due to the static friction. Even when the braking force to be used is set in conformity with the kinetic friction, the possibility of a given push-open type member such as, for example, an ashtray case being prevented from moving in the opening direction is completely eliminated. Thus, the friction damper of this invention permits stable and infallible control of the speed of the push-open type member.

## Claims

1. A friction damper for a push-open type member, comprising:
a housing (1) having a storing chamber (1a);
a rotor (3) having a leading terminal part (3a) and disposed rotatably in said storing chamber (1a) of said housing (1);
a leaf spring member (5) attached fast to said rotor (3) and adapted to slide on an inner wall surface of said storing chamber (1a) and thereby exerting a braking force on the push-open type member by virtue of friction resistance being generated between an outer peripheral surface of said leaf spring member (5) and said inner wall surface of said storing chamber (1a) by causing the outer peripheral surface of said leaf spring member (5) to slide along the inner wall surface of said storing chamber (1a) of said housing (1); and
means for allowing the push-open type member to start moving smoothly in an opening direction, characterized by said means comprising a toothed wheel (4) having an interlocking hole (4a) for interlocking said toothed wheel (4) with the leading terminal part (3a) of said rotor (3), the leading terminal part of said rotor (4), and an idle empty area (S) interposed between the interlocking hole (4a) of said toothed wheel (4) and the leading terminal part of said rotor (3), such that said toothed wheel (4) is allowed to rotate idly in the range of said idle empty area.

## Patentansprüche

1. Reibungsdämpfer für ein Aufschiebeelement, umfassend:
ein Gehäuse (1) mit einer Speicherkammer (1a);
einen Rotor (3) mit einem vorderen Endteil (3a), der drehbar in dieser Speicherkammer (1a) dieses Gehäuses (1) angeordnet ist;
ein Blattfederelement (5), das fest an diesem Rotor (3) befestigt und so ausgebildet ist, daß es auf einer Innenwandfläche dieser Speicherkammer (1a) gleitet und hierbei eine Bremskraft auf das Element vom Aufschiebetyp aufgrund des Reibungswiderstandes ausübt, der zwischen einer äußeren Umfangsfläche dieses Blattfederelements (5) und dieser Innenwandfläche dieser Speicherkammer (1a) erzeugt wird, indem die Außenumfangsfläche dieses Blattfederelements (5) veranlaßt wird, längs der Innenwandfläche dieser Speicherkammer (1a) dieses Gehäuses (1) zu gleiten; und
Mittel, die es dem Element vom Aufschiebetyp ermöglichen, mit einer glatten Bewegung in einer Öffnungsrichtung zu beginnen,
dadurch gekennzeichnet, daß diese Mittel ein Zahnrad (4) mit einem der Verriegelung dienenden Loch (4a) umfassen, um dieses Zahnrad (4) mit dem vorderen Endteil (3a) dieses Rotors (3) zu verriegeln, wobei der vordere Endteil dieses Rotors (3) und ein loser leerer Bereich (S) zwischen diesem Verriegelungsloch (4a) dieses Zahnrades (4) und dem vorderen Endteil dieses Rotors (3) zwischengeschaltet ist, derart, daß dieses Zahnrad (4) die Möglichkeit erhält, sich lose im Bereich dieses losen leeren Bereichs zu drehen.

## Revendications

1. Amortisseur à friction pour un organe du type à ouverture par poussée, comprenant :
un boîtier (1) ayant une chambre de stockage (1a) ;
un rotor (3) ayant une partie terminale avant (3a) et disposé de façon tournante dans ladite chambre de stockage (1a) du dit boîtier (1) ;
un ressort à lame (5) fixé audit rotor (3) et pouvant glisser sur une surface de paroi intérieure de ladite chambre de stockage (1a) de façon à exercer une force de freinage sur l'organe du type à ouverture par poussée du fait de la résistance de friction engendrée entre une surface périphérique extérieure dudit ressort à lame (5) et ladite surface de paroi intérieure de ladite chambre de stockage (1a) par glissement de la surface périphérique extérieure dudit ressort à lame (5) le long de la surface de paroi intérieure de ladite chambre de stockage dudit boîtier (1) ; et
des moyens permettant à l'organe de type à ouverture par poussée de commencer à se déplacer doucement dans une direction d'ouverture ;
caractérisé en ce que lesdits moyens comprennent un pignon (4) comportant un trou d'accouplement (4) pour accouplement dudit pignon (4) avec la partie terminale avant (3a) dudit rotor (3), la partie terminale avant dudit rotor, et une zone vide de course morte (S) interposée entre le trou d'accouplement (4a) dudit pignon (4) et la partie terminale avant dudit rotor (3), de sorte que ledit pignon (4) peut tourner à vide dans la plage de ladite zone vide de course morte.
